# DEMANDE DE BREVET EUROPEEN

(11) **EP 1 523 137 A1**
(43) Date de publication de la demande: **13.04.2005**
(21) Numéro de dépôt: 04291998.5
(22) Date de dépôt: 05.08.2004
(51) Int. Cl.: H04L 12/56

(54) **Fourniture de services par réservation de ressources au sein d'un réseau de communications à gestion de ressources par des règles de politique**

(30) Priorité: 12.08.2003 FR 0309860
(71) Demandeur: ALCATEL, 75008 Paris (FR)
(72) Inventeur: Chevanne, Michel, 92140 Clamart (FR); Martinot, Olivier, 92120 Draveil (FR); Delegue, Gérard, 94230 Cachan (FR); Betge-Brezetz, Stéphane, 75015 Paris (FR); Marilly, Emmanuel, 91240 Saint-Michel-sur-Orge (FR); Cuervo, Fernando, Ottawa, Ontario K0A 1T0 (CA)
(74) Mandataire: Chaffraix, Sylvain

(57) **Abrégé**

Un système (RMS) est dédié à la gestion de ressources au sein d'un réseau de communications comprenant une multiplicité de ressources (NEQ, NEL) pouvant remplir un rôle de réseau assigné, défini par des règles de politique. Le système (RMS) comprend i) des moyens de gestion de politique (PM) chargés d'élaborer les règles de politique, ii) des moyens de contrôle (NRC) couplés aux ressources (NEQ, NEL) et chargés, lorsqu'ils reçoivent une demande de fourniture d'un service, de sélectionner une ressource, satisfaisant à un rôle de réseau correspondant au service, parmi certaines ressources du réseau qui n'ont pas encore été associées à un rôle de traitement associé au service demandé, et d'associer à cette ressource sélectionnée un rôle de traitement associé au service demandé, et iii) un serveur de politique (PS) couplé aux moyens de contrôle (NRC) et aux moyens de gestion (PM) et chargé de stocker les règles de politique et, lorsqu'il reçoit la désignation de la ressource sélectionnée et des rôles de réseau et de traitement associés, de déterminer parmi les règles de politique stockées les règles de politique qui définissent le rôle de réseau associé au rôle de traitement afin de les transmettre à la ressource sélectionnée (NEQ, NEL) pour qu'elle les instaurent.

## Description

L'invention concerne le domaine de la gestion des ressources d'un réseau de communications.

On entend ici par « ressource » un équipement de réseau, ou un élément d'un équipement de réseau, ou encore une connexion de réseau.

Par ailleurs, on entend par « équipement de réseau» tout type de matériel, comme par exemple des serveurs, des terminaux, des commutateurs, des routeurs ou des concentrateurs, capable d'échanger des données, notamment de gestion, selon un protocole de gestion de réseau avec le système de gestion de réseau (ou NMS pour « Network Management System ») de son réseau d'appartenance. Le protocole de gestion de réseau peut être par exemple le protocole SNMP (pour « Simple Network Management Protocol » RFC 2571-2580) utilisé notamment dans les réseaux de type IP ou ADSL, le protocole TL1 utilisé notamment dans les réseaux de type SONET, le protocole Q3 utilisé notamment dans les réseaux de type SDH, ou encore les protocoles CLI (ligne de commande) et CORBA *(Common Object Request Broker Architecture).*

De plus, on entend par « élément » tout composant d'un équipement de réseau capable d'assurer un traitement de trafic, comme par exemple une carte, une interface, un étage (ou « shelf »), ou un tiroir (ou « rack »).

Comme le sait l'homme de l'art, la gestion des ressources d'un réseau peut s'opérer de deux façons selon le type de système de gestion NMS utilisé.

Un premier type concerne les systèmes de gestion NMS classiques dans lesquels toutes les informations concernant le réseau (liens, capacités, connexions, et analogues) sont échangées par l'intermédiaire d'une couche de gestion de réseau (ou NML pour « Network Management Layer »). Dans ce premier type, la couche de gestion NML sait donc tout sur la topologie du réseau et sur ses ressources et gère tout.

Ce premier type est très efficace, mais particulièrement onéreux. En outre, toute la complexité du réseau étant intégrée dans le système de gestion NMS, il est difficile de le faire évoluer et de le maintenir à jour. De plus, le système de gestion NMS n'est pas bien adapté à la délégation de tâche au plan de contrôle des équipements du fait que celui-ci comprend toujours plus d'intelligence et qu'il est de plus en plus souvent intégré à l'intérieur des équipements. Enfin, certains types de gestion de service ne sont pas faciles à intégrer dans un système de gestion NMS classique. Chaque application de gestion de service doit en effet faire l'objet d'un codage en dur de sa logique de service, ce qui prend du temps du fait de l'absence de mécanisme de génération automatisé.

Un second type concerne les systèmes de gestion dits « à règles de politique» (ou « policy rules »). Dans certains réseaux de communications, les ressources sont en effet gérées en fonction d'une politique (ou « policy ») définie par des règles de politique. On entend ici par « règle de politique » une règle de type « si <condition> alors <action> ».

Ces règles de politique définissent des traitements de trafic, associés à des services, que doivent effectuer les éléments ou équipements de réseau lorsqu'ils les ont instaurées.

De tels systèmes de gestion à règles de politique (ou « *Policy-based management systems* », en anglais) sont décrits notamment dans les brevets américains US 6 463 470 et US 6 366 577 ou dans la demande de brevet américain US 2004/0039803.

En d'autres termes, une ou plusieurs règles de politique définissent un rôle de réseau qu'une ressource doit assurer lors qu'il lui a été assigné. La demande de brevet WO 03/012670 décrit un système de gestion à base de règles de politique utilisant cette notion de rôle de réseau.

L'opérateur (ou superviseur) d'un réseau commence donc par assigner un rôle de réseau à une ressource, compte tenu des accords de niveau de service (ou SLAs pour « Service Level Agreements ») passés avec le(s) client(s) concerné(s), puis il élabore une ou plusieurs règles de politique définissant ce rôle de réseau qu'il associe ensuite audit rôle. Ces règles de politique sont élaborées à l'aide d'un gestionnaire de politique (ou « policy manager »), puis elles sont transmises à un serveur de politique (ou « policy server ») chargé de les valider, de les stocker et de les transmettre sélectivement aux équipements concernés afin qu'ils les instaurent.

Ce second type offre une grande flexibilité en terme de définition de nouveaux services, mais, comme le type précédent, il ne dispose pas de suffisamment de mécanismes de génération automatisés, notamment pour ce qui concerne la vérification des nouvelles politiques, la création de variantes de nouvelles politiques et l'instauration de nouvelles politiques (tâches qui nécessitent l'écriture de programmes spécifiques pour différentes parties du système de gestion). En outre, ce second type n'offre pas de mécanisme de réservation de ressource. Dans la plupart des situations, la fourniture d'un service entraîne en effet l'allocation de ressources, ce qui est limitatif.

Aucun système de gestion connu n'apportant une entière satisfaction, l'invention a donc pour but d'améliorer la situation.

Elle propose à cet effet un procédé de fourniture de ressources, pour un réseau de communications comportant des ressources pouvant remplir un rôle de réseau assigné, défini par des règles de politique, consistant, lorsqu'un service est demandé, à sélectionner une ressource, satisfaisant à un rôle de réseau correspondant à ce service demandé, parmi certaines ressources du réseau qui n'ont pas encore été associées à un rôle de traitement associé au service demandé, puis à associer à cette ressource sélectionnée un rôle de traitement associé au service demandé, et enfin à déterminer parmi un ensemble de règles de politique chaque règle de politique qui définit le rôle de réseau associé à ce rôle de traitement afin de la transmettre à la ressource sélectionnée pour qu'elle l'instaure.

Le procédé selon l'invention peut comporter d'autres caractéristiques qui pourront être prises séparément ou en combinaison, et notamment :
- on peut sélectionner les ressources parmi des ressources enregistrées. Par exemple, chaque ressource enregistrée est désignée par un identifiant stocké en correspondance de ses capacités de traitement de trafic. Dans ce cas, la sélection de ressource peut consister à vérifier si une ressource enregistrée dispose de capacités permettant de remplir le rôle de réseau qui correspond au service choisi,
- on peut stocker les identifiants de ressource en correspondance d'identifiants de rôle de réseau et de rôle de traitement qui leurs sont éventuellement associés,
- on peut transmettre la demande de fourniture d'un service accompagnée d'une définition du rôle de réseau associé et d'une définition du rôle de traitement associé. Mais en variante, les rôles de réseau peuvent être stockés dans une mémoire de rôles, afin qu'à réception d'une demande de fourniture de service on puisse déterminer automatiquement dans la mémoire le rôle de réseau correspondant, avant de procéder à la sélection,
- on peut stocker les règles de politique en correspondance du rôle de réseau associé,
- chaque rôle de réseau peut être défini par au moins une capacité de ressource,
- on peut modifier un rôle de réseau lorsque aucune ressource ne remplit ce rôle de réseau et/ou lorsqu'une ressource remplissant ce rôle présente des capacités compatibles avec la modification,
- on peut supprimer un rôle de réseau lorsque aucune ressource ne remplit ce rôle de réseau,
- on peut assigner directement un rôle de réseau à une ressource lorsque cette ressource dispose de capacités qui incluent chaque capacité désignée par ce rôle de réseau,
- on peut assigner plusieurs (au moins deux) rôles de réseau différents à certaines ressources,
- avant de procéder à une sélection de ressource consécutive à une demande de service, on peut effectuer une phase préliminaire consistant à déterminer dans l'ensemble de règles de politique s'il existe une ou plusieurs règles de politique qui définissent le rôle de réseau qui correspond au service demandé.

L'invention propose également un système de gestion de ressources pour un réseau de communications, comprenant une multiplicité de ressources susceptibles de remplir un rôle de réseau assigné, défini par des règles de politique, et comprenant des moyens de gestion de politique chargés d'élaborer les règles de politique et un serveur de politique chargé de stocker les règles de politique et de les transmettre sélectivement aux ressources afin qu'elles les instaurent.

Ce système de gestion se caractérise par le fait, d'une part, qu'il comprend également des moyens de contrôle couplés au serveur de politique et aux ressources, et chargés lorsqu'ils reçoivent une demande de fourniture d'un service, de sélectionner une ressource, qui satisfait à un rôle de réseau correspondant à ce service demandé, parmi certaines ressources du réseau qui n'ont pas encore été associées à un rôle de traitement associé au service demandé, et d'associer à cette ressource sélectionnée un rôle de traitement associé au service demandé, et d'autre part, que son serveur de politique est chargé, lorsqu'il reçoit la désignation de la ressource sélectionnée et des rôles de réseau et de traitement associés, de déterminer parmi les règles de politique stockées la ou les règles de politique qui définissent le rôle de réseau associé au rôle de traitement afin de la ou les transmettre à la ressource sélectionnée.

Le système de gestion selon l'invention peut comporter d'autres caractéristiques qui pourront être prises séparément ou en combinaison, et notamment :
- des moyens de contrôle chargés de déterminer les capacités de certaines au moins des ressources du réseau afin de les stocker dans une mémoire d'enregistrements en correspondance d'un identifiant de ressource, les ressources ainsi stockées étant alors dites ressources enregistrées,
- des moyens de contrôle chargés de sélectionner les ressources parmi des ressources enregistrées dans une mémoire d'enregistrements sous la forme d'un identifiant de ressource et de capacités associées. Dans ce cas, les moyens de contrôle sont par exemple chargés de déterminer dans la mémoire d'enregistrements chaque ressource enregistrée qui dispose de capacités permettant de remplir le rôle de réseau correspondant au service choisi,
- des moyens de contrôle chargés de stocker les identifiants de ressource dans la mémoire d'enregistrements en correspondance d'identifiants de rôle de réseau et de rôle de traitement qui leurs sont éventuellement associés,
- des moyens de contrôle comportant des moyens d'interface graphique permettant à un utilisateur de leur communiquer la définition du rôle de réseau associé à un service demandé et/ou la définition du rôle de traitement associé audit service demandé. En variante, l'utilisateur ne communique que les définitions de rôle de traitement, les définitions de rôles de réseau étant fournies par ailleurs et stockées dans une mémoire de rôles. Dans ce cas, lorsque les moyens de contrôle reçoivent une demande de fourniture de service, ils déterminent dans la mémoire de rôles un rôle de réseau qui correspond à ce service, avant d'effectuer la sélection,
- des moyens de contrôle chargés, lorsqu'ils en reçoivent l'ordre des moyens d'interface graphique, de modifier la définition d'un rôle de réseau désigné si et seulement si aucune ressource ne remplit ce rôle de réseau ou si et seulement si une ressource remplit ce rôle de réseau mais dispose de capacités compatibles avec la modification,
- des moyens de contrôle chargés, lorsqu'ils en reçoivent l'ordre des moyens d'interface graphique, de supprimer un rôle de réseau si et seulement si aucune ressource ne remplit ce rôle de réseau,
- des moyens de contrôle capables d'assigner un rôle de réseau complémentaire à une ressource lorsque cette ressource dispose de capacités qui incluent chaque capacité désignée par ce rôle de réseau,
- des moyens de contrôle capables d'assigner plusieurs rôles de réseau différents à certaines ressources,
- des moyens de contrôle capables, lorsqu'ils reçoivent une demande de fourniture de service et avant de procéder à la sélection de ressource, d'adresser au serveur de politique une demande de vérification d'existence de règle(s) de politique correspondant au service demandé, afin de ne procéder à la sélection qu'à condition que ces règles existent,
- une mémoire de règles accessible au serveur de politique et stockant les règles de politique en correspondance du rôle de réseau associé,
- des moyens de médiation interfacés entre les ressources, d'une part, et les serveur de politique et moyens de contrôle, d'autre part, et chargés d'assurer le dialogue, d'une part, entre les ressources et le serveur de politique ou les moyens de contrôle, et d'autre part, entre le serveur de politique et les moyens de contrôle.

L'invention porte en outre sur un serveur de gestion d'un système de gestion de réseau (ou NMS), équipé d'un système de gestion de ressources du type de celui présenté ci-avant.

L'invention est particulièrement bien adaptée, bien que de façon non exclusive à la gestion de ressources telles que les équipements de réseau, les éléments d'équipements de réseau et les connexions de réseau.

D'autres caractéristiques et avantages de l'invention apparaîtront à l'examen de la description détaillée ci-après, et des dessins annexés, sur lesquels :
- la figure 1 illustre de façon schématique un exemple de réalisation d'un système de gestion de ressources selon l'invention, intégré dans un système de gestion de réseau NMS, et
- la figure 2 illustre de façon schématique un exemple de réservation de ressource selon l'invention.

Les dessins annexés pourront non seulement servir à compléter l'invention, mais aussi contribuer à sa définition, le cas échéant.

L'invention a pour objet de permettre la réservation de ressources au sein d'un réseau de communications dont les ressources sont gérées à l'aide de règles de politique.

Dans ce qui suit, on considère à titre d'exemple illustratif que le réseau de communications est au moins en partie de type Internet (IP). Mais, l'invention s'applique à d'autres types de réseau gérés, comme par exemple aux réseaux de transmission de type WDM, SONET ou SDH, aux réseaux de données de type ATM, ou aux réseaux de voix de type classique, mobile ou NGN.

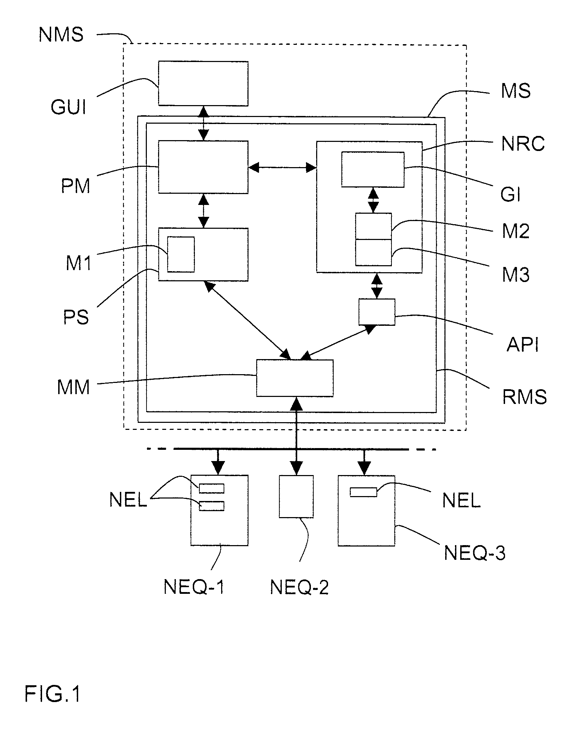

Comme illustré sur la figure 1, un réseau de communications géré se compose de façon très schématique d'une multiplicité d'équipements de réseau NEQ-i (ici i = 1 à 3, à titre d'exemple), reliés les uns aux autres par des moyens de communications, et d'un système de gestion de réseau (ou NMS pour « Network Management System ») destiné à permettre au gestionnaire (ou superviseur) du réseau de gérer et contrôler à distance les équipements NEQ-i auxquels il est couplé.

On entend ici par « équipement de réseau » NEQ-i un matériel capable d'échanger des données de gestion avec le système de gestion de réseau NMS, et plus précisément avec un serveur de gestion MS qu'il comprend, selon un protocole de gestion choisi, comme par exemple le protocole SNMP (pour « Simple Network Management Protocol » RFC 2571-2580), ou les protocoles TL1, CORBA, CLI ou Q3. Il s'agit, par exemple, de serveurs périphériques ou de coeur, de terminaux, de commutateurs, de routeurs ou de concentrateurs.

Un équipement de réseau NEQ-i peut être constitué d'un unique élément de réseau NEL constituant une ressource, ou de plusieurs constituant chacun, ou ensemble, une ou plusieurs ressources. On entend ici par « élément de réseau » tout composant d'un équipement de réseau NEQ-i capable d'assurer au moins un traitement de trafic. Il s'agit par exemple d'une carte, d'une interface, d'un étage (ou « shelf »), ou d'un tiroir (ou « rack »). Par ailleurs, on entend ici par « trafic aussi bien un flux de paquets de données qu'un simple paquet de données.

Comme indiqué ci-dessus, le système de gestion de réseau NMS comprend un serveur de gestion MS dans lequel est préférentiellement implanté un système de gestion de ressources RMS, selon l'invention.

Ce système de gestion de ressources RMS comprend tout d'abord un gestionnaire de politique PM (ou « Policy Manager ») chargé de transformer en règles de politique des spécifications de niveau de service (ou SLS pour « Service Level Specification »), définissant des accords de niveau de service (ou SLA) que l'opérateur a passés avec ses clients, et qui lui sont transmises par l'opérateur via une interface graphique de type GUI du système de gestion de réseau NMS.

Ces règles de politique sont destinées à définir les traitements de trafic que les différents équipements de réseau NEQ-i et éléments de réseau NEL, et plus généralement les différentes ressources, doivent effectuer afin de mettre en oeuvre les services offerts par le réseau.

Le système de gestion de ressources RMS comprend également un serveur de politique PS (ou « Policy Server ») alimenté en règles de politique par le gestionnaire de politique PM. Il est plus précisément chargé de valider les règles de politique qu'il reçoit du gestionnaire de politique PM, de les stocker dans une mémoire de règles M1, et de les transmettre sélectivement, sur ordre, aux ressources du réseau concernées (NEQ et NEL).

Il est important de préciser que le gestionnaire de politique PM transmet au serveur de politique PS des règles de politique accompagnées d'un rôle de réseau associé, sur lequel on reviendra plus loin. Par conséquent, le serveur de politique PS stocke dans la mémoire de règles M1 une table de correspondance entre des jeux de règles et des rôles de réseau (« table de correspondance règles/rôles »).

Le gestionnaire de politique PM et le serveur de politique PS définissent une couche de politique de ressources.

Le système de gestion de ressources RMS comprend en outre un contrôleur de ressources du réseau NRC qui contrôle l'algorithme de sélection et réservation de ressources qui sera décrit plus loin. Comme on le verra également plus loin, ce contrôleur de ressources du réseau NRC est également chargé d'enregistrer, de configurer et d'identifier des ressources en tant que cibles de politique. Par ailleurs, l'aspect topologique d'un service étant contrôlé via le contrôleur de ressources du réseau NRC, ce dernier peut être chargé de créer certaines ressources, comme par exemple des connexions entre équipements NEQ ou éléments NEL du réseau.

Ce contrôleur de ressources du réseau NRC est couplé, d'une part, au gestionnaire de politique PM et, d'autre part, aux équipements NEQ-i et éléments NEL du réseau, de préférence via au moins une interface de programmation d'application de type API (pour « Application Programming Interface »).

Préférentiellement, comme illustré, et bien que cela ne soit pas obligatoire, le système de gestion de ressources RMS comprend un module de médiation MM interfacé entre les ressources NEQ-i et NEL, d'une part, et les serveur de politique PS et contrôleur de ressources du réseau NRC, d'autre part. Ce module de médiation MM est chargé d'assurer le dialogue, d'une part, entre les ressources NEQ-i et NEL et le serveur de politique PS ou le contrôleur de ressources du réseau NRC, et d'autre part, entre le serveur de politique PS et le contrôleur de ressources du réseau NRC.

Un tel module de médiation MM n'est pas utile lorsque les équipements NEQ-i ou éléments NEL de réseau comprennent directement les politiques. Dans ce cas l'homme de l'art appelle les équipements des « points d'application de politique (ou PEPs pour « Policy Enforcement Points »). Comme évoqué ci-avant, le contrôleur de ressources du réseau NRC est chargé de contrôler l'algorithme de réservation de ressources du système de gestion de réseau NMS. Il comprend pour ce faire, préférentiellement, une interface graphique GI, de type GUI, destinée à permettre à un utilisateur de lui transmettre des définitions de rôles de réseau et/ou des définitions de rôles de traitement. L'interface graphique GI pourrait éventuellement permettre à l'utilisateur de transmettre au contrôleur de ressources du réseau NRC des demandes de fourniture de service, mais, il est préférable que ces demandes parviennent audit contrôleur de ressources du réseau NRC par l'intermédiaire du gestionnaire de réseau PM (lequel les reçoit généralement de l'interface graphique GUI du système de gestion de réseau NMS).

Par définition, un rôle de réseau définit un rôle qu'un équipement NEQ-i ou élément NEL de réseau, non désigné, est susceptible de remplir au sein du réseau pour mettre en oeuvre un service ou une partie d'un service. En d'autres termes, un rôle de réseau est associé à un service, lequel correspond à un ou plusieurs traitements de trafic. Préférentiellement, un rôle de réseau est défini par au moins une capacité de traitement de trafic d'une ressource (non désignée), comme par exemple une fonctionnalité, telle que la mise en forme du trafic (ou « traffic shaping ») ou une vitesse de traitement.

Il est important de noter qu'un rôle de réseau ne peut être rempli que par des ressources d'un certain type.

Lorsque l'opérateur veut procéder à la réservation d'une ressource, il doit adresser au contrôleur de ressources du réseau NRC une demande de fourniture d'un service. Comme indiqué ci-avant, cette demande parvient préférentiellement au contrôleur de ressources du réseau NRC par l'intermédiaire du gestionnaire de réseau PM. Cette demande est accompagnée soit de la définition du rôle de réseau associé au service et de la définition d'un rôle de traitement associé (sur lequel on reviendra plus loin), soit seulement de la définition d'un rôle de traitement associé. Dans ce dernier cas, il faut que le contrôleur de ressources du réseau NRC dispose de la définition du rôle de réseau associé au service demandé. Il comporte à cet effet une mémoire de rôles M2, dédiée à la mémorisation des définitions de rôle de réseau communiquées par l'opérateur via l'interface graphique GI.

Par conséquent, lorsque le contrôleur de ressources du réseau NRC reçoit une demande de fourniture d'un service, soit elle est accompagnée d'une définition de rôle de réseau et d'un rôle de traitement, soit elle n'est accompagnée que d'un rôle de traitement et ledit contrôleur de ressources du réseau NRC doit extraire de la mémoire de rôles M2 la définition de rôle de réseau qui est associée au service demandé.

Une fois en possession d'un rôle de réseau, le contrôleur de ressources du réseau NRC doit procéder à la sélection d'une ressource du réseau qui satisfait à ce rôle de réseau. Pour ce faire, il effectue sa sélection parmi certaines ressources du réseau qui n'ont pas encore été associées à un rôle de traitement (ou « business role »).

Par définition, un rôle de traitement identifie le rôle d'une ressource choisie compte tenu des caractéristiques spécifiques du service auquel il est associé. Un rôle de traitement est donc destiné à être associé (ou attaché) à une ressource qui a été sélectionnée pour remplir un rôle de réseau correspondant à un service requis. En d'autres termes, un rôle de réseau limite l'utilisation d'une ressource à une « instanciation » particulière d'un service, si bien qu'il agit comme une espèce de label de sélection de ressource. Par contre, un rôle de traitement définit comment l'accès d'un client particulier à un point d'accès de service doit être configuré. Le mot « configuré » doit être ici compris dans une définition très large.

Le contrôleur de ressources du réseau NRC effectue ses sélections parmi des ressources dites enregistrées. Une ressource enregistrée est une ressource dont un identifiant est stocké dans une mémoire d'enregistrements M3, éventuellement (et préférentiellement) en correspondance de ses capacités de traitement de trafic.

Le contrôleur de ressources du réseau NRC est préférentiellement chargé d'alimenter cette mémoire d'enregistrements M3 et de la mettre à jour. A cet effet, il peut, par exemple, interroger régulièrement (« polling ») les bases d'informations de gestion (ou MIB pour « Management Information Base ») des équipements de réseau NEQ-i.

En variante, la mémoire d'enregistrements M3 peut être alimentée par un autre module du système de gestion de réseau NMS.

L'identifiant de ressource est un identifiant unique défini par un unique service de nommage afin que chaque ressource du réseau puisse être trouvée indépendamment du contrôleur de ressources du réseau NRC qui les gère. Bien entendu, le service de nommage peut être constitué d'une fédération de sous-services de nommage.

La sélection de ressource consiste soit à vérifier parmi les ressources enregistrées celles qui ne sont pas attachées à un rôle de traitement correspondant au service demandé et qui disposent de capacités disponibles permettant de remplir le rôle de réseau qui correspond au service demandé, soit à créer une ressource si cela a un sens. Cette création de ressource est sous la responsabilité du contrôleur de ressource du réseau NRC, elle n'a de sens que pour des ressources virtuelles (port logique, espace disque...) mais pas pour des ressources physiques.

Afin de permettre cette sélection, les identifiants des ressources enregistrées sont stockés dans la mémoire d'enregistrements M3 en correspondance des identifiants de rôle de traitement et de rôle de réseau qui leurs sont éventuellement associés. La mémoire d'enregistrements M3 stocke donc une table de correspondance ressources/rôles.

Cette phase de sélection peut être précédée par une phase de vérification destinée à s'assurer qu'il existe des règles de politique associées au rôle de réseau correspondant au service demandé. Il est en effet préférable de vérifier si l'opérateur a défini des règles de politique correspondant au service demandé avant de tenter de trouver la ressource qui peut remplir le rôle de réseau associé à ce service demandé.

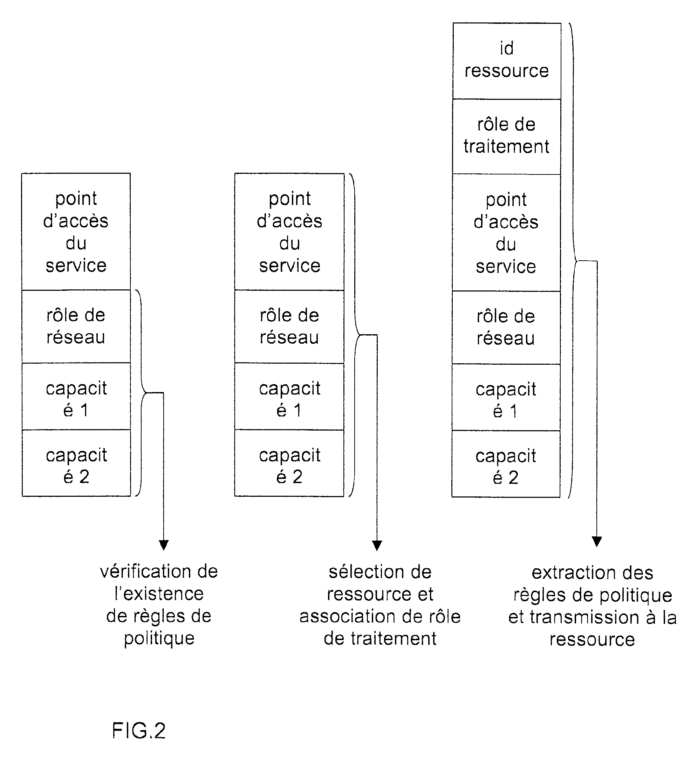

Cette phase de vérification est illustrée de façon très schématique par la pile de gauche de la figure 2. Dans l'exemple illustré, l'opérateur veut assigner un rôle de réseau choisi à une ressource (à déterminer) afin qu'elle fournisse un accès périphérique, par exemple pour un point d'accès de service identifié par des informations complémentaires. Le rôle de réseau choisi est par exemple défini par une première capacité liée à la vitesse de traitement (par exemple 100 Mb) et une seconde capacité liée au type de traitement (par exemple la mise en forme (ou « shaping »)).

Pour effectuer la phase de vérification, le contrôleur de ressources du réseau NRC adresse au serveur de politique PS, ici par l'intermédiaire du module de médiation MM, une demande de vérification d'existence de règle(s) de politique correspondant au rôle de réseau associé au service demandé (la demande comporte donc la définition du rôle de réseau matérialisée par les éléments inclus dans l'accolade de la pile de gauche de la figure 2).

A réception de cette demande le serveur de politique PS accède à la mémoire de règles M1 afin de rechercher dans la table de correspondance règles de politique/rôles de réseau les règles de politique qui correspondent au rôle de réseau reçu.

Une fois la recherche terminée, le serveur de politique PS adresse au contrôleur de ressources du réseau NRC, ici par l'intermédiaire du module de médiation MM, un message de compte rendu précisant si il dispose ou non de règles de politique correspondant au rôle de réseau qu'il lui a adressé.

Si les règles de politique n'existent pas dans la mémoire de règles M1, le contrôleur de ressources du réseau NRC génère un message d'avertissement qu'il transmet à l'opérateur via son interface graphique GI. L'opérateur peut alors générer les règles de politique manquantes à l'aide du gestionnaire de politique MP, qui les transmettra ensuite au serveur de politique PS afin qu'il les stocke dans la mémoire de règles de politique M1, après validation.

Si les règles de politique existent, le contrôleur de ressources du réseau NRC peut alors sélectionner une ressource parmi les ressources enregistrées, comme indiqué ci-dessus (il utilise en fait les éléments inclus dans l'accolade de la pile centrale de la figure 2). Puis, il associe (ou attache) à cette ressource sélectionnée (en fait à son identifiant unique) un rôle de traitement qui lui a été communiqué par l'opérateur via son interface graphique GI. Dans l'exemple illustré, le rôle de traitement spécifie que la ressource sélectionnée doit par exemple remplir le rôle de réseau spécifié afin d'offrir au client X un accès au réseau.

Il est important de noter que le contrôleur de ressources du réseau NRC peut être amené à créer une ressource, comme par exemple une connexion, lorsque celle-ci n'existe pas.

Le contrôleur de ressources du réseau NRC peut alors adresser au serveur de politique PS, ici par l'intermédiaire du module de médiation MM, la définition du rôle de réseau, la définition du rôle de traitement, l'identifiant unique de la ressource sélectionnée et éventuellement des données complémentaires détaillant une instanciation du service demandé, comme par exemple la désignation d'un point d'accès de service. Il met également à jour la table de correspondance ressources/rôles de la mémoire d'enregistrements M3 en stockant l'identifiant de la ressource sélectionnée en correspondance des identifiants de rôle de réseau et de rôle de traitement qu'il vient de lui assigner.

Le serveur de politique PS accède alors à la mémoire de règles M1 et utilise les éléments inclus dans l'accolade de la pile de droite de la figure 2 pour extraire les règles de politique qui vont permettre à la ressource sélectionnée (désignée par son identifiant unique) de se configurer afin de remplir le rôle de réseau qui vient de lui être assigné par le contrôleur de ressources du réseau NRC.

Puis, le serveur de politique PS transmet à l'équipement NEQ-i ou à l'élément NEL de réseau, constituant ou comportant la ressource sélectionnée, ici par l'intermédiaire du module de médiation MM, les règles de politique extraites afin que la ressource les instaurent. La ressource est alors réservée.

Le contrôleur de ressources du réseau NRC peut être également agencé de manière à assurer une ou plusieurs fonctions complémentaires. Ainsi, il peut être chargé, lorsqu'il en reçoit l'ordre d'un utilisateur par son interface graphique GI, de modifier la définition d'un rôle de réseau désigné. Bien entendu, cette modification ne peut survenir qu'à condition qu'aucune ressource ne remplisse le rôle de réseau désigné ou bien qu'il existe une ressource remplissant ce rôle de réseau mais disposant de capacités compatibles avec la modification.

Pour procéder à de telles modifications le contrôleur de ressources du réseau NRC procède donc tout d'abord à une analyse des mémoire de rôles M2 et mémoire d'enregistrements M3, puis si la modification est possible il l'effectue en mettant à jour la mémoire de rôles M2.

Le contrôleur de ressources du réseau NRC peut être également chargé, lorsqu'il en reçoit l'ordre d'un utilisateur par son interface graphique GI, de supprimer un rôle de réseau désigné. Bien entendu, cette suppression ne peut survenir qu'à condition qu'aucune ressource ne remplisse le rôle de réseau désigné.

Pour procéder à de telles suppressions le contrôleur de ressources du réseau NRC procède donc tout d'abord à une analyse de la table de correspondance ressources/rôles stockée dans la mémoire d'enregistrements M3, puis si la suppression est possible il l'effectue en mettant à jour la table de correspondance ressources/rôles et la mémoire de rôles M2.

Le contrôleur de ressources du réseau NRC peut être également chargé, lorsqu'il en reçoit l'ordre d'un utilisateur par son interface graphique GI, d'assigner un rôle de réseau complémentaire à une ressource qui remplit déjà au moins un rôle de réseau. Bien entendu, cette assignation ne peut survenir qu'à condition que la ressource dispose de capacités qui incluent chaque capacité désignée par le rôle de réseau complémentaire.

Pour procéder à de telles assignations le contrôleur de ressources du réseau NRC procède donc tout d'abord à une analyse de la mémoire d'enregistrements M3, puis si l'assignation est possible il l'effectue en mettant à jour la table de correspondance ressources/rôles stockée dans la mémoire d'enregistrements M3.

Le système de gestion de ressources RMS, selon l'invention, et notamment ses gestionnaire de politique PM, serveur de politique PS, contrôleur de ressources du réseau NRC et module de médiation MM, peuvent être réalisés sous la forme de circuits électroniques, de modules logiciels (ou informatiques), ou d'une combinaison de circuits et de logiciels.

L'invention offre également un procédé de fourniture de ressources, pour un réseau de communications comportant des ressources susceptibles de remplir un rôle de réseau assigné, défini par des règles de politique.

Celui-ci peut être notamment mis en oeuvre à l'aide du système de gestion de ressources RMS présenté ci-avant. Les fonctions et sous-fonctions principales et optionnelles assurées par les étapes de ce procédé étant sensiblement identiques à celles assurées par les différents moyens constituant le système de gestion de ressources RMS, seules seront résumées ci-après les étapes mettant en oeuvre les fonctions principales du procédé selon l'invention.

Ce procédé consiste, lorsqu'un service est demandé, à sélectionner une ressource NEQ-i ou NEL, satisfaisant à un rôle de réseau correspondant à ce service, parmi certaines ressources du réseau qui n'ont pas encore été associées à un rôle de traitement associé au service demandé, puis à associer à cette ressource sélectionnée un rôle de traitement associé au service demandé, et enfin à déterminer parmi un ensemble de règles de politique chaque règle de politique qui définit le rôle de réseau associé à ce rôle de traitement afin de la transmettre à la ressource sélectionnée pour qu'elle l'instaure.

L'invention ne se limite pas aux modes de réalisation de système de gestion de ressources, de serveur de gestion et de procédé décrits ci-avant, seulement à titre d'exemple, mais elle englobe toutes les variantes que pourra envisager l'homme de l'art dans le cadre des revendications ci-après.

## Revendications

1. Procédé de fourniture de service pour un réseau de communications comportant des ressources (NEQ, NEL) propres à remplir un rôle de réseau assigné, défini par des règles de politique, **caractérisé en ce qu'**il consiste, en cas de demande de fourniture d'un service, à sélectionner une ressource, satisfaisant à un rôle de réseau correspondant audit service demandé, parmi certaines ressources (NEQ, NEL) du réseau pas encore associées à un rôle de traitement associé audit service demandé, puis à associer à cette ressource sélectionnée un rôle de traitement associé audit service demandé, et à déterminer parmi un ensemble de règles de politique chaque règle de politique définissant le rôle de réseau associé audit rôle de traitement afin de la transmettre à ladite ressource sélectionnée en vue de son instauration.

2. Procédé selon la revendication 1, **caractérisé en ce que** l'on sélectionne lesdites ressources parmi des ressources enregistrées (NEQ, NEL).

3. Procédé selon la revendication 2, **caractérisé en ce que** chaque ressource enregistrée (NEQ, NEL) est désignée par un identifiant stocké en correspondance de capacités de traitement de trafic, et **en ce que** ladite sélection de ressource consiste à vérifier si une ressource enregistrée dispose de capacités permettant de remplir le rôle de réseau correspondant audit service choisi.

4. Procédé selon la revendication 3, **caractérisé en ce que** lesdits identifiants de ressource sont stockés en correspondance d'identifiants de rôle de réseau et de rôle de traitement qui lui sont éventuellement associés, dans une mémoire d'enregistrements (M3).

5. Procédé selon l'une des revendications 1 à 4, **caractérisé en ce que** l'on transmet ladite demande de fourniture d'un service accompagnée d'une définition du rôle de réseau associé et d'une définition du rôle de traitement associé.

6. Procédé selon l'une des revendications 1 à 4, **caractérisé en ce que** lesdits rôles de réseau sont stockés dans une mémoire de rôles (M2), et **en ce qu'**à réception d'une demande de fourniture d'un service on détermine dans ladite mémoire de rôles (M2) le rôle de réseau correspondant, avant de procéder à ladite sélection.

7. Procédé selon l'une des revendications 1 à 6, **caractérisé en ce que** lesdites règles de politique sont stockées en correspondance du rôle de réseau associé, dans une mémoire de règles (M1).

8. Procédé selon l'une des revendications 1 à 7, **caractérisé en ce que** chaque rôle de réseau est défini par au moins une capacité de ressource.

9. Procédé selon l'une des revendications 1 à 8, **caractérisé en ce que** l'on modifie un rôle de réseau lorsqu'aucune ressource ne remplit ledit rôle de réseau et/ou lorsqu'une ressource remplissant ledit rôle de réseau présente des capacités compatibles avec ladite modification.

10. Procédé selon l'une des revendications 1 à 9, **caractérisé en ce que** l'on supprime un rôle de réseau lorsqu'aucune ressource ne remplit ledit rôle de réseau.

11. Procédé selon l'une des revendications 8 à 10, **caractérisé en ce que** l'on assigne directement un rôle de réseau à une ressource lorsque ladite ressource dispose de capacités incluant chaque capacité désignée par ledit rôle de réseau.

12. Procédé selon l'une des revendications 1 à 11, **caractérisé en ce que** l'on assigne au moins deux rôles de réseau différents à certaines ressources.

13. Procédé selon l'une des revendications 1 à 12, **caractérisé en ce qu'**avant de procéder à ladite sélection de ressource on effectue une phase préliminaire consistant à déterminer dans ledit ensemble de règles de politique si il comporte des règles de politique définissant le rôle de réseau correspondant au service demandé.

14. Système de gestion de ressources (RMS), pour un réseau de communications comprenant une multiplicité de ressources (NEQ, NEL) propres à remplir un rôle de réseau assigné, défini par des règles de politique, ledit système comprenant des moyens de gestion de politique (PM) propres à élaborer lesdites règles de politique et un serveur de politique (PS) propre à stocker lesdites règles de politique et à les transmettre sélectivement auxdites ressources (NEQ, NEL) afin qu'elles les instaurent, **caractérisé en ce qu'**il comprend en outre des moyens de contrôle (NRC) couplés audit serveur de politique (PS) et auxdites ressources (NEQ, NEL), et agencés, en cas de réception d'une demande de fourniture d'un service, pour sélectionner une ressource, satisfaisant à un rôle de réseau correspondant audit service demandé, parmi certaines ressources du réseau pas encore associées à un rôle de traitement associé audit service demandé, et pour associer à cette ressource sélectionnée un rôle de traitement associé audit service demandé, et **en ce que** ledit serveur de politique (PS) est agencé, à réception de la désignation de ladite ressource sélectionnée et des rôles de réseau et de traitement associés, pour déterminer parmi lesdites règles de politique stockées chaque règle de politique définissant le rôle de réseau associé audit rôle de traitement afin de la transmettre à ladite ressource.

15. Système selon la revendication 14, **caractérisé en ce que** lesdits moyens de contrôle (NRC) sont agencés pour déterminer les capacités de certaines au moins des ressources (NEQ, NEL) du réseau de manière à les stocker dans une mémoire d'enregistrements (M3) en correspondance d'un identifiant de ressource, lesdites ressources stockées étant alors dites ressources enregistrées.

16. Système selon l'une des revendications 14 et 15, **caractérisé en ce que** lesdits moyens de contrôle (NRC) sont agencés pour sélectionner lesdites ressources parmi des ressources (NEQ, NEL) enregistrées dans une mémoire d'enregistrements (M3) sous la forme d'un identifiant de ressource et de capacités associées.

17. Système selon la revendication 16, **caractérisé en ce que** lesdits moyens de contrôle (NRC) sont agencés pour déterminer dans ladite mémoire d'enregistrements (M3) chaque ressource enregistrée disposant de capacités permettant de remplir le rôle de réseau correspondant audit service choisi.

18. Système selon l'une des revendications 15 à 17, **caractérisé en ce que** lesdits moyens de contrôle (NRC) sont agencés pour stocker lesdits identifiants de ressource dans ladite mémoire d'enregistrements (M3) en correspondance d'identifiants de rôle de réseau et de rôle de traitement qui leurs sont éventuellement associés.

19. Système selon l'une des revendications 14 à 18, **caractérisé en ce que** lesdits moyens de contrôle (NRC) comportent des moyens d'interface graphique (GI) propres à permettre la communication par un utilisateur d'une définition de rôle de réseau associé à un service demandé et/ou d'une définition de rôle de traitement associé audit service demandé.

20. Système selon l'une des revendications 14 à 18, **caractérisé en ce que** lesdits moyens de contrôle (NRC), d'une part, comportent des moyens d'interface graphique (GI) propres à permettre la communication par un utilisateur des définitions de rôles de traitement associés à un service demandé, et de définitions de rôles de réseau, et d'autre part, sont agencés pour stocker lesdites définition de rôles de réseau communiquées dans une mémoire de rôles (M2) et, en cas de réception d'une demande de fourniture d'un service, pour déterminer dans ladite mémoire de rôles (M2) un rôle de réseau correspondant audit service, avant d'effectuer ladite sélection.

21. Système selon l'une des revendications 19 et 20, **caractérisé en ce que** lesdits moyens de contrôle (NRC) sont agencés, à réception d'une demande provenant desdits moyens d'interface graphique (GI) et requérant une modification choisie d'une définition de rôle de réseau, pour procéder à la modification de la définition dudit rôle de réseau lorsqu'aucune ressource ne remplit ledit rôle de réseau ou lorsqu'une ressource (NEQ, NEL) remplit ledit rôle de réseau et dispose de capacités compatibles avec ladite modification.

22. Système selon l'une des revendications 19 à 21, **caractérisé en ce que** lesdits moyens de contrôle (NRC) sont agencés, à réception d'une demande provenant desdits moyens d'interface graphique (GI) et requérant une suppression d'une définition de rôle de réseau, pour procéder à ladite suppression lorsque aucune ressource (NEQ, NEL) ne remplit ledit rôle de réseau.

23. Système selon l'une des revendications 19 à 22, **caractérisé en ce que** lesdits moyens de contrôle (NRC) sont agencés pour assigner un rôle de réseau complémentaire à une ressource (NEQ, NEL) lorsque ladite ressource dispose de capacités incluant chaque capacité désignée par ledit rôle de réseau.

24. Système selon l'une des revendications 14 à 23, **caractérisé en ce que** lesdits moyens de contrôle (NRC) sont propres à assigner au moins deux rôles de réseau différents à certaines ressources (NEQ, NEL).

25. Système selon l'une des revendications 14 à 24, **caractérisé en ce que** lesdits moyens de contrôle (NRC) sont agencés, en cas de réception d'une demande de fourniture d'un service et avant de procéder à ladite sélection de ressource, pour adresser audit serveur de politique (PS) une demande de vérification d'existence de règle(s) de politique correspondant audit service demandé, et, en cas de réception d'un message signalant une telle existence, pour procéder à ladite sélection.

26. Système selon l'une des revendications 14 à 25, **caractérisé en ce qu'**il comprend une mémoire de règles (M1) accessible audit serveur de politique (PS) et stockant lesdites règles de politique en correspondance du rôle de réseau associé.

27. Système selon l'une des revendications 14 à 26, **caractérisé en ce qu'**il comprend des moyens de médiation (MM) interfacés entre lesdites ressources (NEQ, NEL), d'une part, et ledit serveur de politique (PS) et lesdits moyens de contrôle (NRC), d'autre part, et agencés pour permettre un dialogue, d'une part, entre lesdites ressources (NEQ, NEL) et ledit serveur de politique (PS) ou lesdits moyens de contrôle (NRC), et d'autre part, entre ledit serveur de politique (PS) et lesdits moyens de contrôle (NRC).

28. Serveur de gestion (MS) d'un système de gestion de réseau (NMS), **caractérisé en ce qu'**il comprend un système de gestion de ressources (RMS) selon l'une des revendications 14 à 27.

29. Utilisation des procédé, système de gestion de ressources (RMS) et serveur de gestion (MS) selon l'une des revendications précédentes pour des ressources choisies dans un groupe comprenant les équipements de réseau (NEQ), les éléments (NEL) d'équipements de réseau (NEQ) et les connexions de réseau.
